# EUROPÄISCHE PATENTSCHRIFT

(11) **EP 0 673 096 B1**
(45) Veröffentlichungstag und Bekanntmachung des Hinweises auf die Patenterteilung: **02.09.1998**
(21) Anmeldenummer: 95250051.0
(22) Anmeldetag: 02.03.1995
(51) Int. Cl.: H02B 1/48, H02B 1/32

(54) **Niederspannungs-Schaltkasten mit Verdrahtungsfreiraum**
Low voltage switch box having free space for wiring
Boîte de distribution à basse tension ayant un espace libre pour le câblage

(30) Priorität: 18.03.1994 DE 9404899 U
(43) Veröffentlichungstag der Anmeldung: 20.09.1995
(73) Patentinhaber: SIEMENS AKTIENGESELLSCHAFT, 80333 München (DE)
(72) Erfinder: Müller, Rolf, D-63785 Obernburg (DE); Schneider, Erwin, A-2301 Gr. Enzersdorf (AT)

(56) Entgegenhaltungen:
- EP-A- 0 167 833
- DE-A- 1 465 775
- DE-U- 7 334 075
- DE-U- 9 010 522
- DE-U- 9 202 815

## Beschreibung

Die Erfindung betrifft Niederspannungs-Schaltkasten zur Aufnahme und Einbau von Schutz-, Melde- und Steuerungstechnik-Einrichtungen, wobei die einzelnen Einrichtungen anlagenindividuell zusammengestellt und durch örtlich und/oder zeitlich voneinander einzubringende Verdrahtungen miteinander verknüpfbar sind.

Bei den Niederspannungs-Schaltkästen der eingangs definierten Art gehören zur Grundausstattung eine den technischen Bedürfnissen angepaßte Art und Anzahl von Klemmleisten, über die die einzelnen Einrichtungen mit einer entsprechenden Außenverdrahtung funktionell untereinander verbunden sind. Wegen der örtlichen Unterschiedlichkeit hinsichtlich der Unterbringung der einzelnen Einrichtungen innerhalb der Niederspannungs-Schaltkästen sind neben den Klemmleisten entsprechende, meist aus Kunststoff bestehende, Leistungskanäle als Verbindungselemente zwischen den einzelnen Einrichtungen innerhalb der Niederspannungs-Schaltkästen vorgesehen, aus deren Seitenbereichen die Verbindungsleitungen durch entsprechende Schlitze zu den Klemmleisten bzw. anderen Anschlußelementen der entsprechenden Einrichtungen geführt sind. An den Leitungskanälen sind darüber hinaus sogenannte Trageschienen zur Befestigung der als Einbaugeräte ausgestatteten Einrichtungen angebracht. Sowohl das Einbringen der einzelnen Einrichtungen innerhalb der Niederspannungs-Schaltkästen als auch deren Verdrahtung untereinander können dabei je nach Bedarf örtlich und/oder zeitlich unterschiedlich eingebaut werden. Insbesondere bei umfangreichen Nachrüstungen entsteht dadurch ein nicht unbeträchtlicher Arbeitsaufwand.
Die der Erfindung zugrundeliegende Aufgabe besteht darin, für die eingangs definierten Niederspannungs-Schaltkästen eine konstruktive Lösung zur Aufnahme der einzelnen Einrichtungen anzugeben, bei der der einsatzbedingte Mehraufwand hinsichtlich der Montage der einzelnen Einrichtungen sowie auch deren Verdrahtung untereinander auf ein Minimum begrenzt werden kann, ohne jedoch Einschränkungen hinsichtlich der möglichen Vielfalt zum Nachrüsten von zusätzlichen Einrichtungen hinnehmen zu müssen. Erfindungsgemäß wird dies erreicht durch die Merkmale
1.1 der Niederspannungs-Schaltkasten weist in mindestens einem innenliegenden Außenbegrenzungsbereich einen für die Verdrahtung raumbildenden einseitig offenen U-förmigen Halterahmen auf, der lösbar am innenliegenden Außenbegrenzungsbereich befestigt ist,
1.2 der Halterahmen enthält in den der Befestigungsseite abgewandten Schenkelbereichen jeweils mindestens zwei einander zugeordnete Scharnierschlitze zum Einhängen einer Montagetafel,
1.3 die Montagetafeln stehen mit den Scharnierschlitzen schwenkbar und/oder entnehmbar in Eingriff und sind mit dem jeweils angrenzenden Außenbegrenzungsbereich derart lösbar verbunden, daß die Montagetafeln im Schwenkbereich jeweils im Winkel größer 90° zur Ebene der Scharnierschlitze angeordnet sind.

Mit dem Vorsehen der damit raumbildenden Halterahmen an den innenliegenden Außenbegrenzungsbereichen derartiger Niederspannungs-Schaltkästen, die beispielsweise deren Rückwände bilden können, sind die Montagetafeln in den Scharnierschlitzen schwenkbar angeordnet, wobei die Montagetafeln selbst der Aufnahme von Tragschienen zum Einbau der entsprechenden Einrichtungen dienen. Unterhalb, bzw. bei seitlich schwenkbar angeordneten Montagetafeln im Bereich der Seitenbegrenzung, entstehen somit verhältnismäßig große Verdrahtungsfreiräume, deren Zugänglichkeit durch die schwenkbaren Montagetafeln insbesondere beim Nachbau von Einrichtungen sehr erleichtert ist. Durch eine entsprechende Lagesicherung der einzelnen Leitungen der Verdrahtung der Einrichtungen ist erreicht, daß auf vorgefertigte Kabelkanäle verzichtet werden kann. Mit den verschwenkbaren Montagetafeln lassen sich damit in einfacher Weise sowohl die einzelnen Einrichtungen als auch deren Verdrahtung nachträglich und an unterschiedlichen Orten vornehmen. Auf einen zusätzlichen Schutz der einzelnen Leitung innerhalb der Verdrahtung zur Verhinderung von Beschädigungen kann verzichtet werden, wenn die Außenkonturen der Montagetafeln durch entsprechende abgerundete bzw. abgebogenen Kanten gesichert sind.

Gemäß einer vorteilhaften Ausgestaltung der Erfindung ist nach Anspruch 2 vorgesehen, daß die Montagetafeln zur Aufnahme der Einrichtungen mit Tragschienen unterschiedlicher Konturen bestückt sind. Damit lassen sich alle für die Niederspannungs-Schaltkästen üblichen Einrichtungen mit den unterschiedlichsten Bauformen unterbringen.

Die Erfindung wird in einem figürlich dargestellten Ausführungsbeispiel näher erläutert, in dem die Außenbegrenzungsbereiche des Niederspannungs-Schaltkastens lediglich durch strichpunktierte Linien angedeutet sind.

Der Niederspannungs-Schaltkasten NS ist mit einem U-förmig ausgestalteten Halterahmen HR versehen, der am innenliegenden Außenbegrenzungsbereich RW, beispielsweise an der Rückwand des Niederspannungs-Schaltkastens NS, lösbar angebracht ist. Desweiteren ist ersichtlich, daß der Halterahmen HR in den der Befestigungsseite abgewandten Schenkelbereichen SH des Halterahmens HR mindestens zwei zueinander zugeordnete Scharnierschlitze SS zum Einhängen der jeweiligen Montagetafel MT enthält. Die Montagetafeln MT können innerhalb der Scharnierschlitze SS, nachdem sie durch Lösen ihrer angedeuteten Verschraubungen von dem entsprechenden Außenbegrenzungsbereich - Rück- bzw. Seitenwand des Niederspannungs-Schaltkastens NS - getrennt sind, so eingeschwenkt werden, daß sie aus den Scharnierschlitzen SS direkt entnommen werden können. Desweiteren ist angedeutet, daß die Montagetafeln MT mit nicht näher bezeichneten Tragschienen ausgerüstet sein können, die den Einbau von Einrichtungen unterschiedlichster Bauformen zulassen. Der nachträgliche Einbau der einzelnen Einrichtungen in die entsprechenden Niederspannungs-Schaltkästen NS kann in der Weise vereinfacht werden, daß die Montagetafeln MT durch Lösen ihrer Verschraubungen von den Rück- bzw. Seitenwänden in Richtung zum Halterahmen HR verschwenkt und damit der Freiraum für die Unterbringung der Verdrahtung für die einzelnen Einrichtungen frei zugänglich gemacht ist. Auf besondere Schutzmaßnahmen für die in dem Verdrahtungsfreiraum angeordneten Leitungen kann insofern verzichtet werden, daß die Montagetafeln MT in ihren Außenkonturen entsprechend abgerundet bzw. durch abgebogene Kanten gesichert sind.

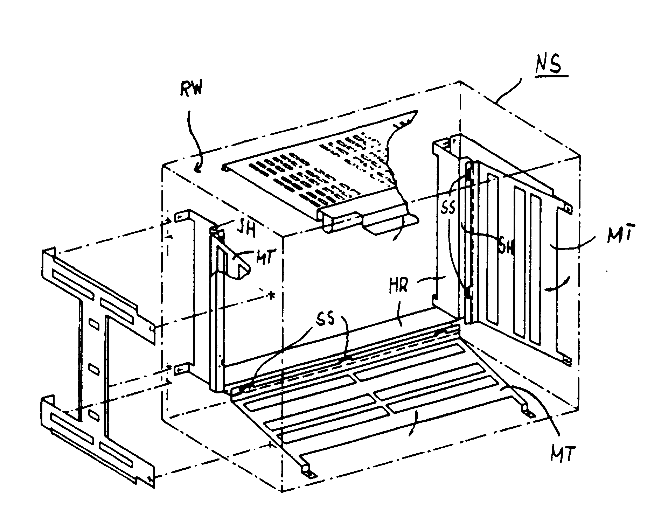

## Patentansprüche

1. Niederspannungs-Schaltkasten zur Aufnahme und Einbau von Schutz-, Melde- und Steuerungstechnik-Einrichtungen, wobei die einzelnen Einrichtungen anlagenindividuell zusammengestellt und durch örtlich und/oder zeitlich voneinander einzubringende Verdrahtungen miteinander verknüpfbar sind, **gekennzeichnet durch** die Merkmale
1.1 der Niederspannungs-Schaltkasten (NS) weist in mindestens einem innenliegenden Außenbegrenzungsbereich (RW) einen für die Verdrahrung raumbildenden einseitig offenen U-förmigen Halterahmen (HR) auf, der lösbar am innenliegenden Außenbegrenzungsbereich (RW) befestigt ist,
1.2 der Halterahmen (HR) enthält in den der Befestigungsseite abgewandten Schenkelbereichen (SH) jeweils mindestens zwei einander zugeordnete Scharnierschlitze (SS) zum Einhängen einer Montagetafel (MT),
1.3 die Montagetafeln (MT) stehen mit den Scharnierschlitzen (SS) schwenkbar und/oder entnehmbar in Eingriff und sind mit dem jeweils angrenzenden Außenbegrenzungsbereich (RW) derart lösbar verbunden, daß die Montagetafeln (MT) im Schwenkbereich jeweils im Winkel größer 90° zur Ebene der Scharnierschlitze (SS) angeordnet sind.

2. Niederspannungs-Schaltkasten nach Anspruch 1,
**gekennzeichnet durch** das Merkmal
2.1 die Montagetafeln (MT) sind zur Aufnahme der Einrichtungen mit Tragschienen unterschiedlicher Konturen bestückt.

## Claims

1. Low-voltage switch box for accommodating and installing devices for protection, signalling and control-engineering, with the individual devices being assembled in a system-individual manner and being linkable to each other by means of sets of wiring to be introduced separately in terms of location and/or time, characterized by the features:
1.1 the low-voltage switch box (NS) has in at least one internal outer limiting region (RW) a U-shaped retaining frame (HR), which creates space for the wiring, is open on one side and is releasably fastened to the internal outer limiting region (RW),
1.2 the retaining frame (HR) contains in the limb regions (SH) directed away from the fastening side in each case at least two hinge slots (SS), associated with each other, for suspending an assembly board (MT),
1.3 the assembly boards (MT) are engaged with the hinge slots (SS) in a rotatable and/or removable manner and are releasably connected to the respectively adjoining outer limiting region (RW) in such a way that the assembly boards (MT) in the rotary region are arranged in each case at an angle greater than 90° with respect to the plane of the hinge slots (SS).

2. Low-voltage switch box according to claim 1, characterized by the feature:
2.1 the assembly boards (MT) are fitted with mounting rails having different contours in order to accommodate the devices.

## Revendications

1. Boîte de distribution à basse tension de réception et de montage de dispositifs de la technique de protection, de la signalisation et de la commande, les dispositifs étant rassemblés en étant disposés individuellement et pouvant être reliés les uns aux autres par des câblages à mettre en place indépendamment les uns des autres localement et/ou dans le temps, caractérisée par les caractéristiques :
1.1 La boîte de distribution (NS) à basse tension comporte, dans au moins une zone (RW) de délimitation se trouvant à l'intérieur, lin cadre (HR) de maintien en forme de U ouvert d'un côté, ménageant de l'espace pour le câblage et fixé de manière amovible à zone (RW) de délimitation se trouvant à l'intérieur,
1.2 Le cadre (HR) de maintien comporte dans les branches (SH) éloignées du côté de fixation respectivement au moins deux fentes (SS) formant charnière, associées l'une à l'autre, d'accrochage d'un tableau (MT) de montage,
1.3 Les tableaux (MT) de montage sont en prise avec les fentes (SS) formant charnière de manière à pouvoir basculer et/ou à pouvoir être enlevées et sont reliés de manière amovible à la zone (RW) de délimitation adjacente, de façon que les tableaux (MT) de montage soient disposés dans la zone de basculement en faisant un angle supérieur à 90° avec le plan des fentes (SS) formant charnière.

2. Boîte de distribution à basse tension suivant la revendication 1, caractérisée par la caractéristique :
2.1 Les tableaux (MT) de montage sont, pour la réception des dispositifs, munis de rails porteurs de contour différent.
